Europäisches Patentamt

European Patent Office

Office européen des brevets

(19)

(11) Publication number: **0 105 640 B1**

(12)                            EUROPEAN PATENT SPECIFICATION

(45) Date of publication of patent specification: **25.11.87**          (51) Int. Cl.⁴: **A 21 D 6/00, A 23 L 1/172**

(21) Application number: **83305199.8**

(22) Date of filing: **07.09.83**

(54) Improved flour.

(30) Priority: **07.09.82 GB 8225414**

(43) Date of publication of application:
**18.04.84 Bulletin 84/16**

(45) Publication of the grant of the patent:
**25.11.87 Bulletin 87/48**

(84) Designated Contracting States:
**AT BE CH DE FR IT LI NL SE**

(56) References cited:
**FR-A-1 029 536
GB-A- 332 847
GB-A- 401 941
GB-A- 428 620
US-A-2 509 449
US-A-3 036 919
US-A-3 615 674**

(73) Proprietor: **UNILEVER NV
Burgemeester s'Jacobplein 1 P.O. Box 760
NL-3000 DK Rotterdam (NL)**

(72) Inventor: **Yoell, Richard William
2 Park Cottage Village Road
Bromham Bedfordshire (GB)**

(74) Representative: **Litherland, Donald et al
UNILEVER PLC Patents Division P.O. Box 68
Unilever House
London EC4P 4BQ (GB)**

Courier Press, Leamington Spa, England.

## Description

This invention relates to improved flour and flour compositions especially dry baking mixes, doughs and batters and cooked products thereof, especially bread.

Highly refined flour consists of the endosperm of the grain, almost completely separated in the extraction process of milling from the remainder. The desirability of retaining the separated, non-endosperm fractions of the grain in the diet is becoming widely acknowledged and accordingly the demand is increasing for wholemeal flour in which these fractions are recombined with the endosperm, and for wholemeal baked goods. Whereas normally extracted flour has good shelf-life, the shelf-life of wholemeal flour is poor. This is attributable in large measure to the activity of lipolytic and proteolytic enzymes occurring almost exclusively in the non-endosperm fractions. The former reacts with flour lipids to form peroxides which eventually impart off-flavours to the flour and the latter with protein in the endosperm, breaking it down and destroying its capacity to form gluten, the visco-elastic properties of which are essential for breadmaking.

Enzyme activity can be suppressed by heat treatment, but this produces an undesirable effect on the properties of flour by suppressing the activity of amylase enzymes. Amylase is found in the endosperm and breaks down amylopectin and amylose to maltose and other carbohydrate fractions on which the yeast feeds in breadmaking, and also dextrins yielding flavour, texture and colour characteristics. Steam treatment of grain is described in British patent 12736 of 1886 with the object of improving exraction and the quality of the flour, which is itself substantially unaffected by the treatment, the treatment merely conditioning the wheat.

British patents 332847 and 401941 disclose heat treatment of wheat germ to remove enzyme activity in the absence of endosperm.

The present invention provides a flour composition including dietary fibre comprising an added non-endosperm milled grain fraction which is characterised by the fact that the enzyme activity of the fraction is selectively suppressed.

The composition of the present invention therefore comprises a mixture of conventionally extracted flour with unimpaired amylase activity, and a non-endosperm milled grain free from enzyme activity, the combination providing a composition which may contain all the components used in wholemeal flour but which exhibits substantially longer shelf-life owing to the suppression of enzyme activity in the non-endosperm part of the flour.

The non-endosperm fractions may be recovered from grain which has been heated, preferably by steam, thereby suppressing enzyme activity of both the endosperm and non-endosperm parts of the grain. Other methods of suppressing enzyme activity in the grain may be used eg, heating especially in the micro- or infra-red range. The period and intensity of the treatment should be controlled to prevent any significant deterioration in the treated fractions. Treatment of separated non-endosperm components for this purpose is less convenient.

The flour recovered from the endosperm extract of the treated grain may be utilised as a thickening ingredient in soup mixes, its effectiveness being dependent upon the presence of amylopectin and amylose which remain intact with the suppression of enzyme activity. The endosperm component of the flour mixture according to the invention may be obtained at various levels of extraction including so-called patent flour and may be bread or other quality flour.

An important advantage of the present invention is that the composition it provides need contain no added ingredient such as salt which has in the past been added to confer improved shelf-life to flour.

The percentage of treated non-endosperm component which is combined with the flour extract may be varied from as low as 10% to as high as 25% or even higher. The compositions of the present invention may include part or all of the components of traditional milled feeds, including the wheat bran, middlings, mill run, shorts, wheat feed and germ meal. The components of the flour products of the invention may be derived from the same or different wheat sources and these may be so-called weak wheat for cakes and strong wheat for breadmaking.

The effective improvement in stability provided by the invention will of course depend upon the completeness or otherwise of the separation of wheat. Thus the flour component being untreated will be less stable if it contains a residue of unseparated wheat bran and other enzyme-rich parts of the milled grain and as far as possible therefore these parts should be effectively separated from the flour.

The invention also provides a method of preparing wholemeal flour of improved shelf-life comprising milling separate grain feedstocks, one of which is treated to suppress enzyme activity, and combining the flour extract from the untreated grain with the bran and other non-endosperm fractions from the treated grain. Preferably the treated grain is heated, eg, with steam.

Wholemeal flour by definition prescribed by law contains the entire composition of all the fractions recovered from milling and recombined and an important advantage of the present invention is that this requirement can be met in a product with much improved shelf-life and without recourse to stabiliser additives. The invention also includes added materials customarily used in culinary mixtures containing flour, for example sugar, dried or whole eggs, leavening agents, flavouring and other conventional additives. Examples of mixtures containing the flour composition of the invention include bread, scone and cake mixes, pizza and doughnut mixes and batter for cakes, pancakes and the like.

## Claims

1. Shelf-stable flour composition comprising a blend of extracted flour and dietary fibre comprising a non-endosperm milled grain fraction with suppressed enzyme activity.

2. Wholemeal flour composition according to Claim 1, which comprises the total non-endosperm extract from milled grain.

3. Composition according to Claim 1 or 2 comprising endosperm and non-endosperm fractions from separately milled and respectively heat-treated grain feedstock supplies.

4. Composition according to Claim 1, 2 or 3 which the percentage of non-endosperm fraction is from 10 to 25%.

5. Culinary mixtures including improved flour as claimed in any of the preceding claims together with sugar and other conventional agents present in cake, bread and pizza mixtures, batters and doughnut mixes.

6. Method of preparing flour of improved shelf-life comprising milling separate grain feedstocks, one of which is heated to suppress enzyme activity, and combining the flour extract from the untreated grain with the non-endosperm fractions from the treated grain.

7. Method of preparing compositions comprising wholemeal flour according to Claim 6 wherein the total non-endosperm fraction milled from the heated, grain feedstock is recombined at 10 to 25% with treated endosperm fraction.

8. Baked farinaceous goods including bread, cakes, pizzas and pancakes, prepared form a composition as claimed in Claims 1 to 5.

## Patentansprüche

1. Lagerbeständige Mehlzusammensetzung eines Gehaltes an einer Mischung aus einem ausgemahlenen Mehl und einer Nahrungsfaser, die eine unterdrückte Enzymaktivität aufweisende, gemahlene Kornfraktion ohne Nährgewebe enthält.

2. Vollkornmehlzusammensetzung nach Anspruch 1, die die gesamte Ausmahlung ohne Nährgewebe vom gemahlenen Korn enthält.

3. Zusammensetzung nach Anspruch 1 oder 2, die die Fraktionen ohne und mit Nährgewebe von gesondert gemahlenen bzw. wärmebehandelten Korneinsatzmaterialien enthält.

4. Zusammensetzung nach Anspruch 1, 2 oder 3, bei der der Prozentgehalt der Fraktion ohne Nährgewebe 10 bis 25 % beträgt.

5. Kulinarische Mischungen, die ein verbessertes Mehl, wie es in irgendeinem der vorhergehenden Ansprüche beansprucht wird, zusammen mit Zucker und anderen herkömmlichen Mitteln enthalten, die in Kuchen-, Brot-, Pizza-, Eierteig- und Krapfenmischungen vorliegen.

6. Verfahren zur Herstellung eines Mehls verbesserter Lagerbeständigkeit, das das Mahlen gesonderter Korneinsatzmaterialien, wovon eines zur Unterdrückung der Enzymaktivität erhitzt wird, und das Kombinieren der Mehlausmahlung des unbehandelten Korns mit den kein Nährgewebe enthaltenen Fraktionen des behandelten Korns umfaßt.

7. Verfahren zur Herstellung von Zusammensetzungen eines Gehaltes an Vollkornmehl nach Anspruch 6, wobei die gesamte Fraktion ohne Nährgewebe, die aus dem erhitzten Korneinsatzgut gemahlen wurde, in einer Menge von 10 bis 25 % mit der Nährgewebe enthaltenden, behandelten Franktion wieder zusammengebracht wird.

8. Gebackene mehlhaltige Waren, einschließlich Brot, Kuchen, Pizzas und Eierkuchen, hergestellt mit der in den Ansprüchen 1 bis 5 beanspruchten Zusammensetzung.

## Revendications

1. Composition de farine stable au stockage, comprenant un mélange de farine extraite et de fibres diététiques comprenant une fraction de grain moulu non endosperme dont l'activité enzymatique a été supprimée.

2. Farine pour pain complet selon la revendication 1, qui comprend l'extrait total non endosperme du grain moulu.

3. Composition selon la revendication 1 ou 2, qui comprend des fractions endosperme et non endosperme provenant de sources de grains séparément moulus et respectivement traité par la chaleur.

4. Composition selon la revendication 1, 2 ou 3, dans laquelle le pourcentage de la fraction non endosperme est de 10 à 25%.

5. Mélanges culinaires comportant une farine améliorée selon l'une quelconque des revendications précédentes ensemble avec le sucre et d'autres agents classiques qu'on trouve dans les mélanges pour gâteaux, pains et pizzas, dans les pâtes à frire et les mélanges pour beignets.

6. Procédé de préparation de farine ayant une durée de stockage améliorée, qui consiste à moudre les charges séparées de grain, dont on chauffe une pour supprimer l'activité enzymatique et ensuite à combiner l'extrait de farine provenant du grain non traité avec les fractions non endosperme du grain traité.

7. Procédé de préparation de compositions comprenant de la farine pour pain complet selon la revendication 6, dans lequel on recombine la fraction totale non endosperme moulue à partir du grain chauffé à raison de 10 à 25% avec la fraction endosperme traitée.

8. Articles farineux cuits, notamment le pain, les gâteaux, les pizzas et les crêpes qu'on prépare à partir d'une composition selon les revendications 1 à 5.